# EUROPÄISCHE PATENTSCHRIFT

(11) **EP 1 811 626 B1**
(45) Veröffentlichungstag und Bekanntmachung des Hinweises auf die Patenterteilung: **13.04.2016**
(21) Anmeldenummer: 06290159.0
(22) Anmeldetag: 24.01.2006
(51) Int. Cl.: H02G 15/34

(54) **Elektrische Durchführung**
Electric feedthrough
Traversée électrique

(43) Veröffentlichungstag der Anmeldung: 25.07.2007
(73) Patentinhaber: Nexans, 75008 Paris (FR)
(72) Erfinder: Allais, Arnaud, 30625 Hannover (DE); Mirebeau, Pierre, 91140 Villebon sur Yvette (FR)
(74) Vertreter: Döring, Roger

(56) Entgegenhaltungen:
- EP-A- 1 283 576
- WO-A-95/28750
- DE-A1- 2 607 516
- DE-B1- 2 830 736
- PATENT ABSTRACTS OF JAPAN Bd. 008, Nr. 115 (E-247), 29. Mai 1984 (1984-05-29) & JP 59 029479 A (TOKYO SHIBAURA DENKI KK), 16. Februar 1984 (1984-02-16)

## Beschreibung

Die Erfindung betrifft eine elektrische Durchführung nach dem Oberbegriff des Patentanspruchs 1.

Eine solche Durchführung geht aus der gattungsgemäßen EP-A-1 283 576 hervor.

Aus der JP 59029479 A geht ein Endenabschluß zur Stromversorgung einer supraleitfähigen Anordnung hervor. Sie besteht aus einem isolierten zentralen Leiter, an den die supraleitfähige Anordnung angeschlossen ist, der in einem Gehäuse angeordnet ist, durch welches ein Kühlmittel strömt. Zur verbesserten Wärmeabfuhr ist um den isolierten Leiter herum ein Rippenrohr angebracht.

Aus der DE 26 07 516 A1 ist ein elektrisches Kabel mit einem Leiter sowie einer den Leiter umgebenden Isolierschicht bekannt. Zwischen dem Leiter und der Isolierschicht ist eine Zwischenschicht aus einem Material vorgesehen, das die Haftung der Isolierschicht an dem Leiter verhindert und dadurch die Entfernung der Isolierschicht von dem Leiter erleichtert.

Aus der eingangs erwähnten EP-A-1 283 576 ist eine elektrische Durchführung bekannt, welche den Leiter eines supraleitfähigen Kabels mit einem elektrischen Netz verbindet. Sie weist einen Leiter auf, der aus Kupfer besteht und von einer festen, elektrisch isolierenden Schicht umgeben ist, die z. B. aus Ethylen-Propylen-Kautschuk oder ähnlichen Materialien besteht. An diesen Leiter ist einerseits das supraleitfähige Kabel und andererseits das bei Umgebungstemperatur befindliche Netz angeschlossen. Die Durchführung weist einen Bereich tiefer Temperatur, in dem beispielsweise flüssiger Stickstoff enthalten ist, einen Bereich geringfügig höherer Temperatur mit gasförmigem Stickstoff und einen bei Umgebungstemperatur liegenden Bereich auf. Dadurch soll der Abstand zwischen der Verbindungsstelle des Leiters des supraleitfähigen Kabels mit dem Leiter der Durchführung und dem Bereich bei Umgebungstemperatur vergrößert werden. Bei dieser bekannten Durchführung können Probleme bei Temperaturänderungen entstehen, wenn z. B. das supraleitfähige Kabel in oder außer Betrieb genommen wird. Bedingt durch die unterschiedlichen thermischen Ausdehnungskoeffizienten des Materials des Leiters der Durchführung und des Isolierwerkstoffes kann es zu thermomechanischen Spannungen kommen, welche die Durchführung im Bereich ihres isolierten Leiters zerstören.

Der Erfindung liegt die Aufgabe zugrunde, die eingangs beschriebene elektrische Durchführung so zu gestalten, daß eine Zerstörung der in derselben vorhandenen Isolierschicht durch thermomechanische Spannungen vermieden ist.

Diese Aufgabe wird durch die im Kennzeichen des Patentanspruchs 1 erfaßten Merkmale gelöst.

Vorteilhafte Ausgestaltungen der Erfindung sind in den Unteransprüchen und der Beschreibung eines Ausführungsbeispiels der Erfindung beschrieben.

Der wesentliche Vorteil dieser Durchführung ist darin zu sehen, daß durch die Zwischenschicht eine kraftschlüssige Verbindung zwischen dem Leiter derselben und der Isolierschicht aufgehoben ist, so daß eine ungehinderte Relativbewegung zwischen dem Leiter und der Isolierschicht ermöglicht wird. Die Zwischenschicht kann aus einem festen oder einem flüssigen bzw. zähflüssigen Material bestehen. Wesentlich ist nur, daß die Zwischenschicht zumindest innerhalb eines Temperaturbereichs von 70 K bis Umgebungstemperatur eine Trennung zwischen dem Leiter und der Isolierschicht der Durchführung gewährleistet.

Ein Ausführungsbeispiel des Erfindungsgegenstandes ist in den Zeichnungen dargestellt.

Es zeigen:
Fig. 1 in schematischer Darstellung eine elektrische Durchführung nach der Erfindung.
Fig. 2 eine Einzelheit aus Fig. 1 in vergrößerter Darstellung.

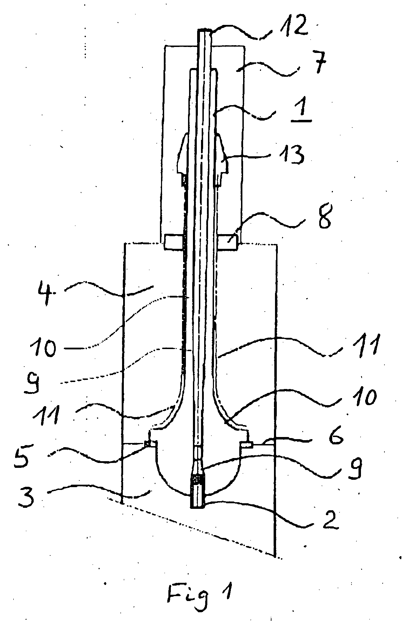

In Fig. 1 ist eine elektrische Durchführung 1 zur Verbindung eines supraleitfähigen Kabels 2 mit einem nicht dargestellten elektrischen Leiter wiedergegeben. Die Verbindung mit dem supraleitfähigen Kabel 2 befindet sich in einem Gehäuse 3, in welchem eine Temperatur im Bereich von 70 K herrscht. Benachbart zu dem Gehäuse 3 befindet sich ein weiteres Gehäuse 4, welches über eine Flanschverbindung 5 mit dem Gehäuse 3 verbunden ist. Eine Trennwand 6 trennt die Innenräume der Gehäuse 3 und 4 voneinander. Der Innenraum des Gehäuses 4 ist vorzugsweise mit einem festen thermischen Isoliermaterial, z. B. Polyurethanschaum, oder einem geschäumten Glasmaterial ausgefüllt.

Oberhalb des Gehäuses 4 befindet sich noch ein weiteres Gehäuse 7, in welchem Umgebungstemperatur herrscht. Das Gehäuse 4 ist gegenüber dem Gehäuse 7 durch eine dichte Trennwand 8 abgeschottet.

Die in dem Gehäuse 4 herrschende Temperatur liegt zwischen der kryogenen Temperatur im Gehäuse 3 und der Umgebungstemperatur im Gehäuse 7. Die Außenwandungen der Gehäuse 3 und 4 bilden einen Kryostat für eine gute thermische Isolierung.

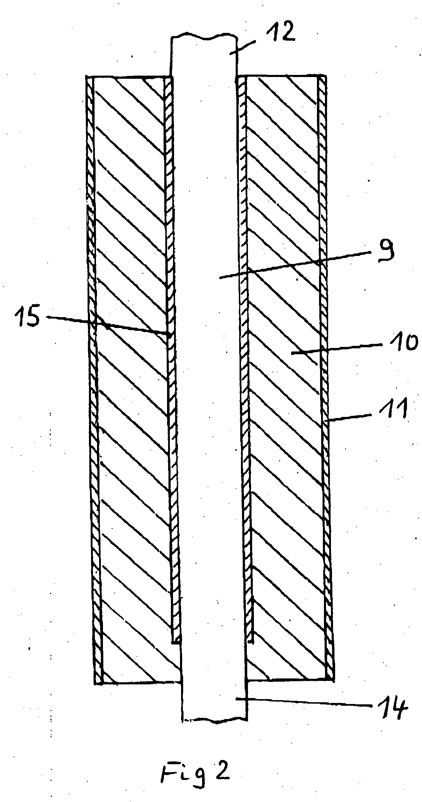

Die Durchführung 1 weist gemäß Fig. 2 einen zentralen Leiter 9 auf, um den herum rundum eine Isolierschicht 10 angeordnet ist. Darüberhinaus ist noch eine Feldsteuerschicht 11 auf der Isolierschicht 10 vorgesehen, die sich zumindest über einen Teil der Isolierschicht 10 erstreckt. Die Feldsteuerschicht 11 besteht aus einer an der äußeren Oberfläche der Isolierschicht 10 anhaftenden Schicht aus Zink oder einem anderen leitfähigen Material. Sie wird vorzugsweise in Form einer Lackschicht aufgebracht. Die Feldsteuerschicht 11 ist mit einem in der Hochspannungstechnik bekannten Feldsteuerkonus 13 (Fig. 1) verbunden. Die Isolierschicht 10 besteht aus einem thermoplastischen oder vernetzten Werkstoff auf der Basis von Polyethylen bzw. Polypropylen. Sie kann aber auch aus Epoxidharz bestehen. Am oberen Ende der Durchführung 1 ist ein Ende 12 des Leiters 9 zu dessen Verbindung mit einem elektrischen Netz vorhanden.

In Fig. 2 ist der Leiter 9 vergrößert dargestellt. Die Enden 12 und 14 des Leiters 9 ragen aus der Isolierschicht 10 hervor. Das Ende 12 wird - wie bereits erwähnt - über ein nicht dargestelltes Kabel mit dem Netz und das Ende 14 mit dem Leiter des supraleitfähigen Kabels 2 verbunden.

Zwischen dem Leiter 9 der Durchführung 1 und der Isolierschicht 10 ist eine Zwischenschicht 15 vorgesehen, die ein ungehindertes Gleiten des Leiters 9 in der Isolierschicht 10 ermöglicht. Es hat sich nämlich herausgestellt, daß beim direkten Aufbringen der Isolierschicht 10 auf den Leiter 9 diese mit dem Leiter verklebt. Wegen der unterschiedlichen Ausdehnungskoeffizienten des Metalls für den Leiter 9, z. B. Kupfer, und dem Material für die Isolierung kommt es beim Abkühlen in den Betriebszustand des supraleitfähigen Kabels 2 bzw. beim Erwärmen im Falle des Abschaltens desselben zu thermomechanischen Spannungen in der Isolierschicht 10, durch welche die Isolierschicht 10 zerstört wird. Durch die Zwischenschicht 15, die eine klebende Verbindung zwischen der Oberfläche des Leiters 9 und der Isolierschicht 10 unterbindet, ist die Durchführung 1 auch nach mehrmaligen Temperaturzyklen voll funktionsfähig.

Als Materialien für die Zwischenschicht 15 kommen feste Stoffe oder Flüssigkeiten in Frage, wobei die Flüssigkeiten in einem Temperaturbereich von in 70 K bis Umgebungstemperatur nicht fest werden dürfen. Als Beispiele für Flüssigkeiten werden Mineralöle bzw. auch Polyisobutylen bevorzugt. Feste Stoffe können Bandbewicklungen oder auf den Leiter 9 aufgetragene Beschichtungen sein. Beispiele für Bandbewicklungen sind Papierband, das auch mit Mineralöl getränkt oder beschichtet sein kann, Band aus Polytetrafluorethylen (PTFE), Glasseideband, Glimmerband oder ähnliche Materialien. Als feste Beschichtungsmaterialien für den Leiter 9 werden Graphit oder PTFE bevorzugt. Außerdem können Materialien eingesetzt werden, in denen Graphit oder PTFE-Pulver als feste Partikel enthalten sind. Darüberhinaus sind auch Kombinationen aus einer Bewicklung, einer Flüssigkeit und festen Materialien mit Gleiteigenschaften möglich.

## Patentansprüche

1. Elektrische Durchführung (1) zur Verbindung einer supraleitfähigen Einrichtung mit einer bei Umgebungstemperatur befindlichen Einrichtung, die einen elektrischen Leiter (9) und eine rundum um denselben vorhandene Isolierschicht (10) aufweist, **dadurch gekennzeichnet, daß** zwischen dem elektrischen Leiter (9) und der Isolierschicht (10) eine Zwischenschicht (15) vorgesehen ist, welche unter Aufhebung einer kranschlüssigen Verbindung zwischen dem Leiter (9) und der Isolierschicht (10) innerhalb eines Temperaturbereichs zwischen 70 Kelvin und Umgebungstemperatur eine Trennung zwischen dem elektrischen Leiter (9) und der Isolierschicht (10) gewährleistet, die eine ungehinderte Relativbewegung zwischen dem elektrischen Leiter (9) und der Isolierschicht (10) und damit ein ungehindertes Gleiten des Leiters (9) in der Isolierschicht (10) ermöglicht.

2. Elektrische Durchführung nach Anspruch 1, **dadurch gekennzeichnet, daß** das Material der Zwischenschicht (15) in dem genannten Temperaturbereich flüssig oder zähflüssig ist.

3. Elektrische Durchführung nach Anspruch 2, **dadurch gekennzeichnet daß** das Material der Zwischenschicht (15) ein Mineralöl ist.

4. Elektrische Durchführung nach Anspruch 1, **dadurch gekennzeichnet, daß** die Zwischenschicht (15) aus Polytetrafluorethylen besteht.

5. Elektrische Durchführung nach Anspruch 1, **dadurch gekennzeichnet, daß** die Zwischenschicht (15) eine Bewicklung aus einem hochspannungsfesten Material ist.

6. Elektrische Durchführung nach Anspruch 1, **dadurch gekennzeichnet, daß** die Zwischenschicht (15) aus Graphit besteht.

7. Elektrische Durchführung nach Anspruch 1, **dadurch gekennzeichnet daß** die Zwischenschicht (15) aus mit Graphit beschichtetem Band besteht.

8. Elektrische Durchführung nach Anspruch 1, **dadurch gekennzeichnet, daß** die Zwischenschicht (15) aus Glimmer- oder Glasseideband besteht.

## Claims

1. Electrical bushing (1) for connecting a superconducting device to a device located at ambient temperature, the bushing (1) having an electrical conductor (9) and an insulating layer (10) surrounding the same, **characterized in that** an interlayer (15) is provided between the electrical conductor (9) and the insulating layer (10), which guarantees with cancellation of a tensionally connection between the conductor (9) and the insulation layer (10) within a temperature range of from 70 kelvin to the ambient temperature a separation between the electrical conductor (9) and the insulating layer (10), by which an unhindered relative movement between the electrical conductor (9) and the insulation layer (10) is possible with the result that the conductor (9) can glide unhindered within the insulation layer (10).

2. Electrical bushing according to claim 1, **characterized in that** the material of the interlayer (15) is fluid or viscous within the mentioned temperature range.

3. Electrical bushing according to claim 2, **characterized in that** the material of the interlayer (15) is a mineral oil.

4. Electrical bushing according to claim 1, **characterized in that** the interlayer (15) consists of polytetrafluorethylene.

5. Electrical bushing according to claim 1, **characterized in that** the interlayer (15) is a wrapping of a material which is high voltage stable.

6. Electrical bushing according to claim 1, **characterized in that** the interlayer (15) consists of graphite.

7. Electrical bushing according to claim 1, **characterized in that** the interlayer (15) consists of a ribbon which is coated with graphite.

8. Electrical bushing according to claim 1, **characterized in that** the interlayer (15) consists of a ribbon of mica or fiber glas.

## Revendications

1. Traversée électrique (1) pour la connexion d'un dispositif supraconducteur à un dispositif se trouvant à une température ambiante, qui présente un conducteur électrique (9) et une couche isolante (10) prévue tout autour de celui-ci, **caractérisée en ce qu'**entre le conducteur électrique (9) et la couche isolante (10) est prévue une couche intermédiaire (15) qui, en supprimant une connexion par engagement par force entre le conducteur (9) et la couche isolante (10) à l'intérieur d'une plage de température entre 70 K et la température ambiante, garantit une séparation entre le conducteur électrique (9) et la couche isolante (10) qui permet un mouvement relatif libre entre le conducteur électrique (9) et la couche isolante (10) et par conséquent un glissement libre du conducteur (9) dans la couche isolante (10).

2. Traversée électrique selon la revendication 1, **caractérisée en ce que** le matériau de la couche intermédiaire (15) dans ladite plage de température est liquide ou visqueux.

3. Traversée électrique selon la revendication 2, **caractérisée en ce que** le matériau de la couche intermédiaire (15) est une huile minérale.

4. Traversée électrique selon la revendication 1, **caractérisée en ce que** la couche intermédiaire (15) se compose de polytétrafluoroéthylène.

5. Traversée électrique selon la revendication 1, **caractérisée en ce que** la couche intermédiaire (15) est un enroulement d'un matériau résistant aux hautes tensions.

6. Traversée électrique selon la revendication 1, **caractérisée en ce que** la couche intermédiaire (15) se compose de graphite.

7. Traversée électrique selon la revendication 1, **caractérisée en ce que** la couche intermédiaire (15) se compose d'une bande revêtue de graphite.

8. Traversée électrique selon la revendication 1, **caractérisée en ce que** la couche intermédiaire (15) se compose d'une bande de mica ou de soie de verre.
